# EUROPEAN PATENT SPECIFICATION

(11) **EP 1 795 406 B1**
(45) Date of publication and mention of the grant of the patent: **26.10.2011**
(21) Application number: 05111926.1
(22) Date of filing: 09.12.2005
(51) Int. Cl.: B60S 1/40, B60S 1/38

(54) **A windscreen wiper device**
Scheibenwischvorrichtung
Dispositif d'essuie-glace

(43) Date of publication of application: 13.06.2007
(73) Proprietor: Federal-Mogul S.A., 6790 Aubange (BE)
(72) Inventor: Boland, Xavier, 6700, Arlon (BE); Fisher, Brian, 6790, Aubange (BE); Koppen, Scott, 6790, Aubange (BE); Herring, Richard, 6790, Aubange (BE); Orjela, Gurdev, 6700, Arlon (BE)
(74) Representative: Hooiveld, Arjen Jan Winfried

(56) References cited:
- EP-A- 1 403 156
- WO-A-02/053421
- WO-A-2005/102801
- DE-A1- 10 349 637
- PATENT ABSTRACTS OF JAPAN vol. 2003, no. 12, 5 December 2003 (2003-12-05) -& JP 2005 119453 A (ICHIKOH IND LTD), 12 May 2005 (2005-05-12)

## Description

The present invention relates to a windscreen wiper device comprising an elastic, elongated carrier element, as well as an elongated wiper blade of a flexible material, which can be placed in abutment with a windscreen to be wiped, which wiper blade includes opposing longitudinal grooves on its longitudinal sides, in which grooves spaced-apart longitudinal strips of the carrier element are disposed, wherein neighbouring ends of said longitudinal strips are interconnected by a respective connecting piece, which windscreen wiper device comprises a connecting device for an oscillating arm, wherein said oscillating arm can be pivotally connected to said connecting device about a pivot axis near one end, with the interposition of a joint part.

Such a windscreen wiper device is known from European patent publication no. 1 403 156 of the same Applicant. This prior art windscreen wiper device is designed as a "yokeless" wiper device, wherein no use is made of several yokes pivotally connected to each other, but wherein the wiper blade is biassed by the carrier element, as a result of which it exhibits a specific curvature. In this prior art windscreen wiper device the joint part comprises at least one resilient tongue engaging in a correspondingly shaped hole provided in the oscillating arm, wherein the resilient tongue is rotatable along an hinge axis between an outward position retaining the wiper blade onto the oscillating arm and an inward position releasing the wiper blade from the oscillating arm. In order to connect the wiper blade onto the oscillating arm, the resilient tongue is initially pushed in against a spring force - as if it were a push button - and then allowed to spring back into the hole provided in the oscillating arm, thus snapping, that is clipping the resilient tongue into the hole. By subsequently pushing in again the resilient tongue against the spring force, the wiper blade may be released from the oscillating arm.

German patent publication no. 103 49 637 (Bosch) discloses a windscreen wiper device according to the preamble of claim 1.

The object of the invention is to provide a improved windscreen wiper device.

In order to accomplish that objective, a windscreen wiper device of the type referred to in the introduction is characterized according to the invention in that said joint part is subsequently connected to said second part by pivotally engaging protrusions of said second part, at the location of said pivot axis, in recesses provided in said joint part, and wherein the oscillating arm can be subsequently connected to said joint part. Said first part is preferably fixedly connected to the longitudinal strips through a welding, brazing ("soldering"), glueing or clamping operation. The essence of the present invention is that said first part is a universal connection part for each type of interconnection between the wiper blade and the oscillating arm. A different type of said second part to be connected to said first part may be used for each different type of interconnection between the wiper blade and the oscillating arm. The advantage achieved by the invention is that a unit consisting of said wiper blade and said first part connected to said longitudinal strips can be manufactured for each and every type of interconnection between said wiper blade and said oscillating arm, while only a relatively cheap and easy to manufacture second part to be connected to said first part has to correspond with a specific type of interconnection between said wiper blade and said oscillating arm. Thus, a universal connection between the wiper blade and the oscillating arm is obtained, so that car drivers are given the possibility to buy also non-original cheap wiper blades fitting the original oscillating arms on their cars. Said second part may be connected to said first part through a welding, brazing ("soldering"), glueing or clamping operation. The protrusions that function as bearing surfaces are spaced far apart, so that the forces exerted thereon will be relatively low.

The present invention thus provides a universal connecting unit that is firmly attached to the oscillating arm and has not a relatively small constructional part playing a last decisive role in interconnection between wiper blade and oscillating arm, all compared to German patent publication no. 103 49 637 (Bosch).

Preferably, said second part is detachably connected to said first part particularly through a snapping/clipping operation. Particularly, said second part comprises clamping means integral therewith engaging around longitudinal sides of said first part that face away from each other.

Preferably, said joint part has an at least substantially U-shaped cross-section at the location of its connection to said second part, wherein said joint part in each leg of said U-shaped cross-section is provided with a recess provided coaxially with said pivot axis. More in particular, the protrusions extend outwards on either side of said second part, wherein the protrusions are at least substantially cylindrical. In the alternative, said protrusions are at least substantially spherical or frusto-conical.

In a preferred embodiment of a windscreen wiper device in accordance with the invention said joint part comprises at least one resilient tongue engaging in a correspondingly shaped hole provided in said oscillating arm, wherein said resilient tongue is rotatable along a hinge axis between an outward position retaining said wiper blade onto said oscillating arm and an inward position releasing said wiper blade from said oscillating arm. Said hinge axis is particularly located near an inner edge of said joint part. In the alternative said hinge axis is located near an outer edge of said joint part, as described in European patent application no. 04103735.9 of the same Applicant. In the latter case said resilient tongue is forced in the outward position under the influence of a moment in case a force is exerted on the wiper blade in a direction away from the oscillating arm. Particularly, the counterforce exerted by the oscillating arm on the resilient tongue engages at a point located behind the hinge axis, seen in the direction of the force exerted on the wiper blade. In other words, said moment of force ensures in a natural way that the resilient tongue is forced automatically in its outward position, that is its position retaining the wiper blade onto the oscillating arm. On the contrary, in the above-mentioned European patent publication no. 1 403 156 of the same Applicant said moment during use compels the resilient tongue to automatically take its inward position, thereby releasing the wiper blade from the oscillating arm, with all negative consequences involved.

In another preferred embodiment of a windscreen wiper device according to the invention the oscillating arm has an at least substantially U-shaped cross-section at the location of its connection to said joint part, wherein said hole is provided in a base of said U-shaped cross-section. In addition thereto or in the alternative said joint part comprises at least two lateral resilient tongues extending outwardly, wherein the oscillating arm has an at least substantially U-shaped cross-section at the location of its connection to said joint part, and wherein each tongue engages in a correspondingly shaped hole provided in a leg of said U-shaped cross-section.

In another preferred embodiment of a windscreen wiper device in accordance with the invention said hole(s) has/have a closed circumference. Such (a) closed hole(s) enhance(s) the retention of the connection device/joint part onto the oscillating arm in all possible directions, particularly both horizontally and vertically. In the alternative, said hole(s) has/have a non-closed circumference.

In another preferred embodiment of a windscreen wiper device according to the invention said joint part is made of plastic (including any synthetic material having some flexibility).

In another preferred embodiment of a windscreen wiper device in accordance with the invention said joint part comprises a recess for snappingly receiving a free end of said oscillating arm. Preferably, a top surface of said free end of said oscillating arm is snappingly received into said recess. More preferably, said free end of said oscillating arm is provided with a finger extending longitudinally therefrom, wherein said finger is snappingly received by said recess. Particularly, said joint part comprises at least one protrusion extending laterally from a longitudinal side of said joint part, said protrusion hooking behind a correspondingly shaped protrusion on said oscillating arm for blocking a longitudinal movement of said wiper blade with respect to said oscillating arm. Particularly, a resilient free end of said joint part can pivot about a hinge axis for snappingly connecting said oscillating arm to said joint part.

The invention will now be explained in more detail with reference to figures illustrated in a drawing, wherein:
- Figure 1 is a perspective, schematic view of a preferred embodiment of a windscreen wiper device in accordance with the invention;
- Figure 2 is a perspective, schematic view of a first part and a second part of a connecting device, as well as a joint part as used in figure 1;
- Figure 3 shows various successive steps for fitting the first and second parts of the connecting device, the joint part and the oscillating arm of figure 2 together; and
- Figures 4, 5 and 6 correspond to figures 1, 2 and 3, respectively, but now relating to another preferred embodiment of a windscreen wiper device according to the invention.

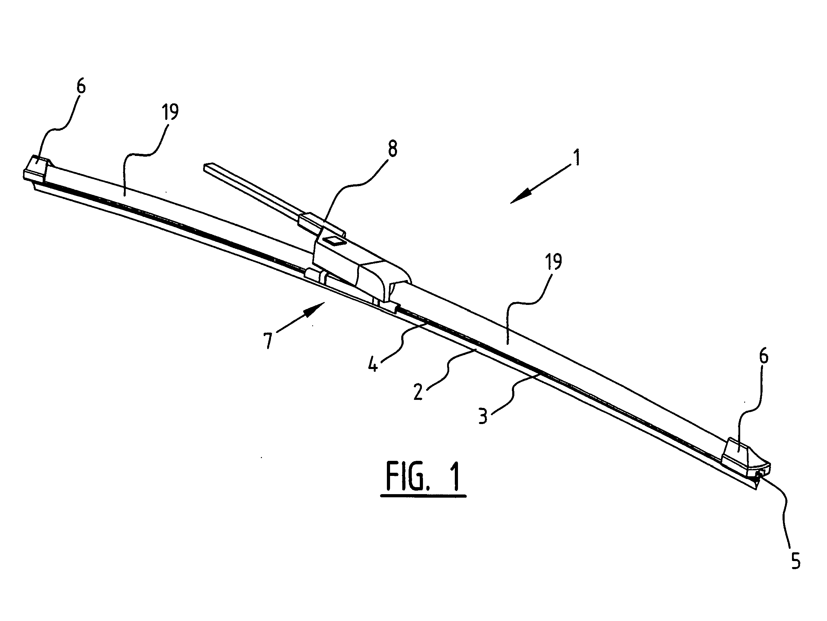

Figure 1 shows a preferred variant of a windscreen wiper device 1 according to the invention. Said windscreen wiper device 1 is built up of an elastomeric wiper blade 2, in the longitudinal sides of which opposing longitudinal grooves 3 are formed, and of longitudinal strips 4 made of spring band steel, which are fitted in said longitudinal grooves 3. Said strips 4 form a flexible carrier element for the wiper blade 2, as it were, which is thus biassed in a curved position (the curvature in operative position being that of a windscreen to be wiped). Neighbouring ends 5 of the strips 4 are interconnected on either side of the windscreen wiper device 1 by means of connecting pieces 6 functioning as clamping members. In this embodiment, the connecting pieces 6 are separate constructional elements, which may be form-locked ("positive locking" or "having a positive fit") or force-locked to the ends 5 of the strips 4. In another preferred embodiment, said connecting pieces 6 are in one piece with the strips 4 made of spring band steel. In the latter case said connecting pieces 6 form transverse bridges for the strips 4, as it were.

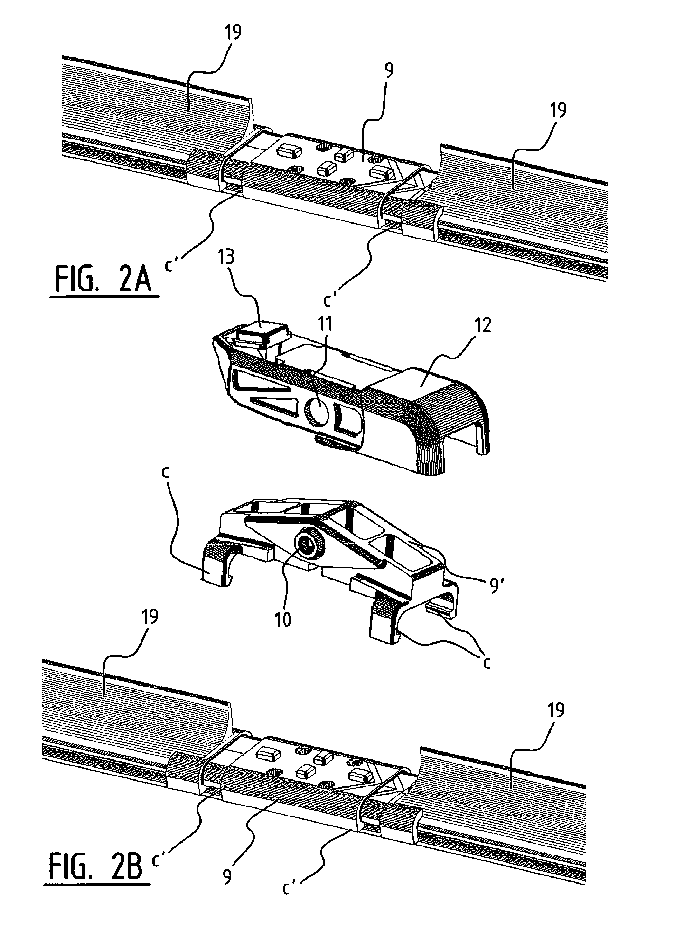

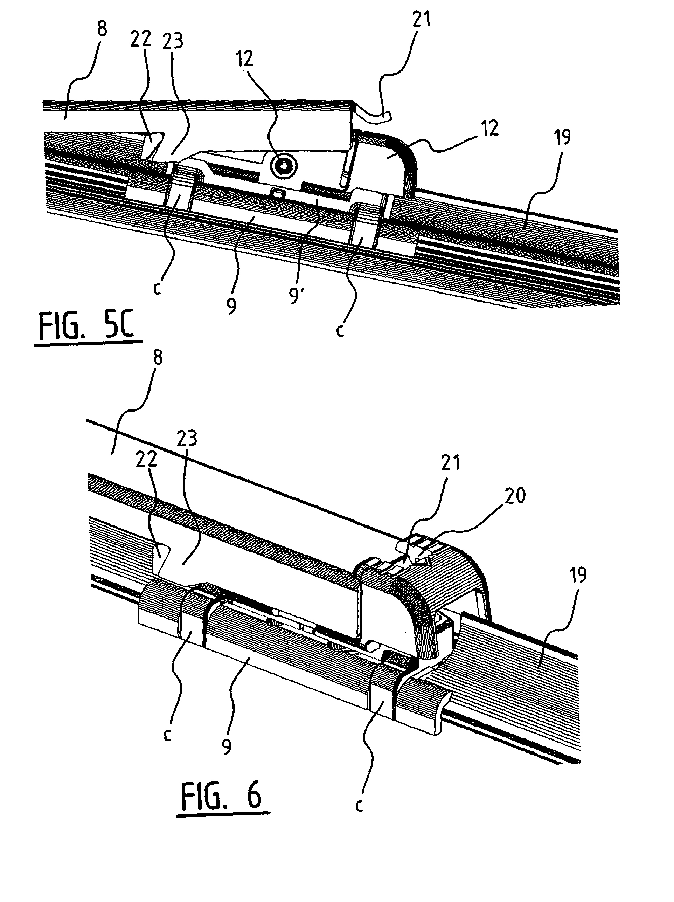

The windscreen wiper device 1 is furthermore built up of a connecting device 7 of plastic material for an oscillating arm 8. Alternatively, the connecting device 7 may also be made of metal, such as steel or aluminum. The connecting device 7 comprises a first flat base part 9 fixedly connected to said strips 4, as well as a second part 9' detachably connected to said first part 9. Said first part 9 is a universal part in the sense that it can be used for each and every type of interconnection between the wiper blade and the oscillating arm, that is, for example, for said interconnection as shown is figures 2 through 5 on the one end and for said interconnection as shown in figures 6 through 9 on the other hand. Said first part 9 is particularly welded, brazed ("soldered"), glued or clamped onto said strips 4. However, said second part 9' differs for each different type of interconnection between the wiper blade and the oscillating arm. In the case shown said second part 9' is detachably connected to said first part 9 using clamping means in the form of resilient legs C integral therewith engaging around longitudinal sides of said first part 9 that face away from each other, as a result of which the second part 9' is firmly attached to the unit consisting of the first part 9, the wiper blade 2 and the strips 4. Particularly, said downwardly extending legs C are resilient such that they can be clipped/snapped around said longitudinal sides of said first part 9, wherein each pair of legs C on one side of said wiper blade are introduced in corresponding recesses C' in said first part 9. The oscillating arm 8 is pivotally connected to said unit about a pivot axis near one end, as will be described hereunder.

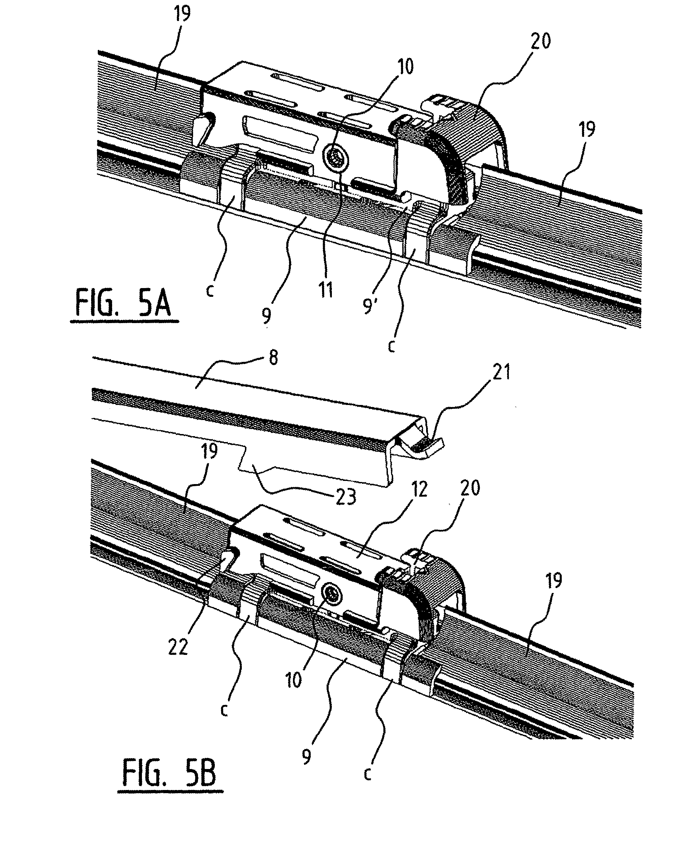

With reference to figure 2 the second part 9' comprises two cylindrical protrusions 10 extending outwards on either side of said connecting device 7. Alternatively, said protrusions may have a spherical or frusto-conical shape. These protrusions 10 pivotally engage in identically shaped cylindrical recesses 11 of a plastic joint part 12. In the alternative the recesses 11 may have a non-closed shape (i.e. open circumference). Said protrusions 10 act as bearing surfaces at the location of a pivot axis in order to pivot the joint part 12 (and the oscillating arm 8 attached thereto) about said pivot axis near one end of the oscillating arm 8. The protrusions 10 are preferably in one piece with the second part 9'; in the alternative, the protrusions 10 are part of a single pivot pin perpendicular to the second part 9'. Said second part 9' may be equipped with a cover or cap in order to obtain an aesthetic appearance thereof, to avoid sharp edges and to provide protection against UV-light etcetera. The joint part 12 comprises one resilient tongue 13 extending outwardly, while the oscillating arm 8 has an U-shaped cross-section at the location of its connection to said joint part 12, so that the tongue 13 engages in an identically shaped hole 14 provided in a base 15 of said U-shaped cross-section (figure 5).

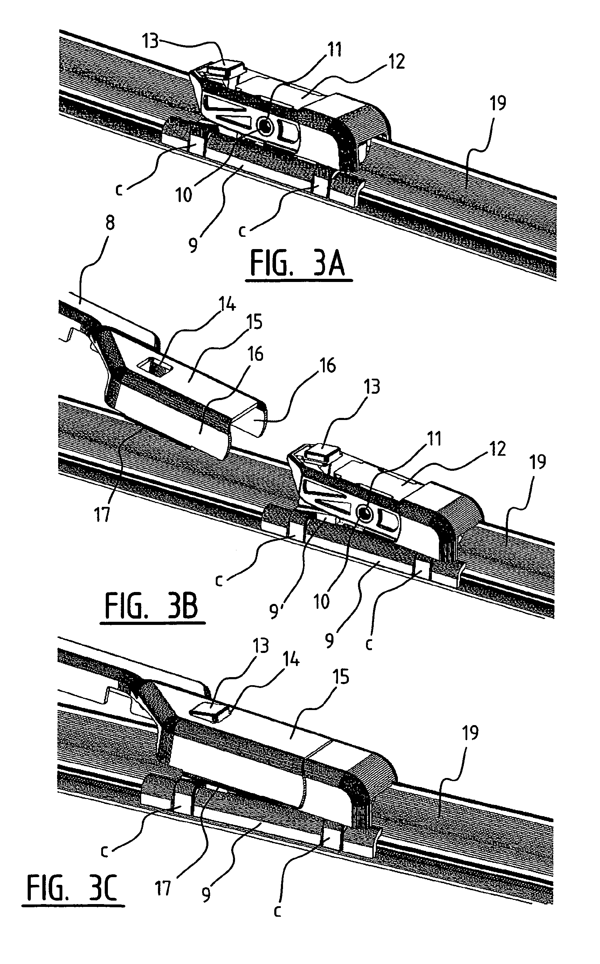

Figure 3 shows the steps of mounting the connecting device 7 with the wiper blade 2 onto the oscillating arm 8. The joint part 12 being already clipped onto the second part 9' is pivoted relative to said second part 9', so that said joint part 12 can be easily slid on a free end of the oscillating arm 8. During this sliding movement the resilient tongue 13 is initially pushed in against a spring force and then allowed to spring back into said hole 14, thus snapping, that is clipping the resilient tongue 13 into the hole 14. This is a so-called bayonet-connection. The oscillating arm 8 together with the joint part 12 may then be pivoted back in a position parallel to the wiper blade 2 in order to be ready for use. By subsequently pushing in again said resilient tongue 13 against the spring force (as if it were a push button), the connecting device 7 and the joint part 2 together with the wiper blade 2 may be released from the oscillating arm 8. Dismounting the connecting device 7 with the wiper blade 2 from the oscillating arm 8 is thus realized by sliding the connecting device 7 and the joint part 2 together with the wiper blade 2 in a direction away from the oscillating arm 8.

Each leg 16 of the U-shaped cross-section of the oscillating arm 8 comprises clamping members formed as inwardly bended edges 17 integral with said legs 16, wherein during use said edges 17 engage round longitudinal sides of said joint part 12 that face away from each other. Thus an enhanced retention of the connecting device 7/joint part 12 onto the oscillating arm 8 is achieved in vertical direction, that is perpendicular to the longitudinal direction of the oscillating arm 8.

Possibly, a spoiler 19 is furthermore present being made in one piece with said wiper blade 2.

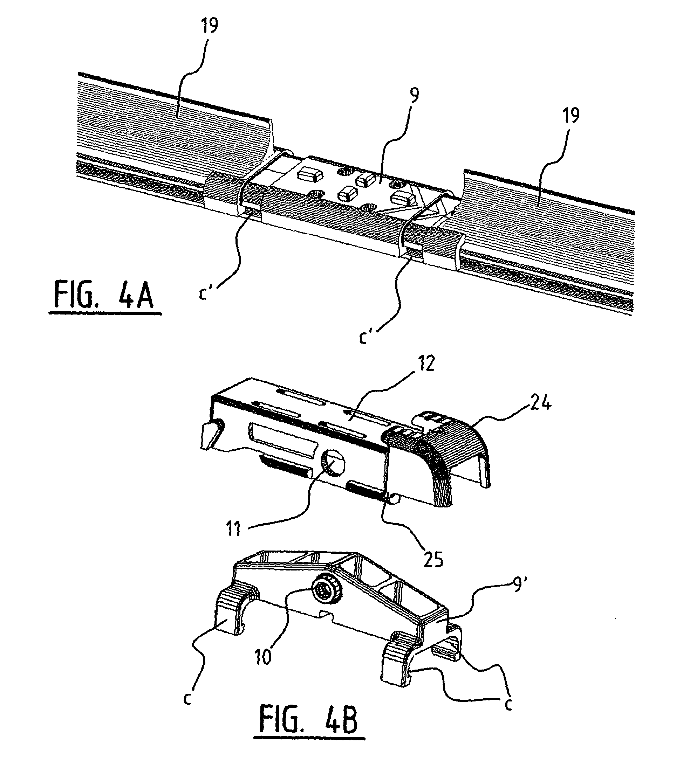

Figures 4, 5 and 6 correspond to figures 1, 2 and 3, respectively, but now relating to another preferred embodiment of a windscreen wiper device according to the invention, wherein corresponding parts have been designated with the same reference numerals.

A first part 9 as shown in figures 4 through 6 is identical to the same of figures 1 through 3, so that said first part 9 is a true universal part for several types of interconnection between a wiper blade 2 and an oscillating arm 8. Again, second part 9' in figures 4 through 6 is detachably connected to said first part 9 through a clipping/snapping operation with the help of resilient legs C extending downwardly and engaging around longitudinal sides of said strips 4 (figures 5 and 6), wherein again one pair of legs C of said second part 9' are introduced in corresponding recesses C' in said first part 9. Also in the embodiment of figures 4 through 6 the second part 9' comprises two cylindrical protrusions 10 extending outwards on either side of said second part 9'. Alternatively, said protrusions may have a spherical or frusto-conical shape. These protrusions 10 pivotally engage in identically shaped cylindrical recesses 11 of a plastic joint part 12. Said protrusions 10 and recesses 11 form mutually cooperating pivot means for pivotally connecting said joint part 12 to said second part 9'.

Actually, the embodiments of figures 1 through 3 on the one hand and figures 4 through 6 on the other hand basically differ in the way the oscillating arm 8 is pivotally connected to said joint part 12. While in the embodiment of figures 1 through 3 a so-called bayonet-connection is used for detachably connecting said oscillating arm 8 to said joint part 12, in the embodiment of figures 4 through 6 a snapconnection is also applied for detachably connecting said oscillating arm 8 to said joint part 12. In particular, said joint part 12 comprises a recess 20 for receiving a top surface of a free end of said oscillating arm 8, while said second part 9 comprises at least one protrusion 22 extending laterally from a longitudinal side of said joint part 12. Said protrusion 22 hookes behind a correspondingly shaped protrusion 23 on said oscillating arm 8 for blocking a longitudinal movement of said wiper blade with respect to said oscillating arm 8 (figure 6). Said top surface of said free end of said oscillating arm 8 is provided with a stiff finger 21 extending longitudinally therefrom.

Figure 5 shows the steps of mounting the wiper blade 2 onto the oscillating arm 8. First the joint part 12 is clipped onto the second part 9' (figure 5A), while said oscillating arm 8 is subsequently pivoted relative to said joint part 12, so that said protrusion 22 on said second part 9' is hooking behind said correspondingly shaped protrusion 23 on said oscillating arm 8 (figure 5C). Finally, said oscillating arm 8 may then be pivoted back relative to said joint part 12 in a position parallel to the wiper blade 2 (figure 6). As a consequence thereof said top surface of said free end of said oscillating arm 8 together with the stiff finger 21 will be clipped/snapped in the recess 20 at the free end of said oscillating arm 8, so that the present windscreen wiper device is ready for use. By a reciprocal movement the wiper blade 2 can be released from the oscillating arm 8. Said snapping movement is realized, as a free end 24 of said joint part 12 is made resiliently, so that it can pivot about a hinge axis 25 (figure 4B).

The invention is not restricted to the variants shown in the drawing, but it also extends to other embodiments that fall within the scope of the appended claims.

## Claims

1. A windscreen wiper device (1) comprising an elastic, elongated carrier element, as well as an elongated wiper blade (2) of a flexible material, which can be placed in abutment with a windscreen to be wiped, which wiper blade (2) includes opposing longitudinal grooves (3) on its longitudinal sides, in which grooves spaced-apart longitudinal strips (4) of the carrier element are disposed, wherein neighbouring ends (5) of said longitudinal strips (4) are interconnected by a respective connecting piece (6), which windscreen wiper device (1) comprises a connecting device (7) for an oscillating arm (8), wherein said oscillating arm (8) can be pivotally connected to said connecting device (7) about a pivot axis near one end, with the interposition of a joint part (12), wherein said connecting device (7) comprises a first part (9) connected to said longitudinal strips (4), as well as a second part (9') connected to said first part (9), wherein said second part (9') and said joint part (12) are provided with mutually cooperating pivot means for pivotally connecting said joint part (12) to said second part (9') , wherein
second part (9') is detachably connected to said first part (9) in such a way that said first part (9) is a flat base part and is arranged to be connected to different types of said second part (9') for different types of interconnection between the wiper blade (2) and the oscillating arm (8), wherein said joint part (12) is subsequently connected to said second part (9') **characterized in that** said joint part (12) is connected to said second part by pivotally engaging protrusions (10) of said second part (9'), at the location of said pivot axis, in recesses (11) provided in said joint part (12), and wherein the oscillating arm (8) can be subsequently connected to said joint part (12).

2. A windscreen wiper device (1) according to claim 1,
wherein said second part (9') is detachably connected to said first part (9) through a snapping/clipping operation.

3. A windscreen wiper device (1) according to claim 1 or 2, wherein said second part (9') comprises clamping means integral therewith engaging around longitudinal sides of said first part (9) that face away from each other.

4. A windscreen wiper device (1) according to claim 1, 2 or 3 wherein said joint part (12) has an at least substantially U-shaped cross-section at the location of its connection to said second part (9'), and wherein said joint part (12) in each leg of said U-shaped cross-section is provided with a recess (11) provided coaxially with said pivot axis.

5. A windscreen wiper device (1) according to any of the preceding claims 1 through 4, wherein the protrusions (10) extend outwards on either side of said second part (9'), and wherein the protrusions (10) are at least substantially cylindrical.

6. A windscreen wiper device (1) according to any of the preceding claims 1 through 5, wherein said joint part (12) comprises at least one resilient tongue (13) engaging in a correspondingly shaped hole (14) provided in said oscillating arm (8), and wherein said resilient tongue (13) is rotatable along a hinge axis between an outward position retaining said wiper blade (2) onto said oscillating arm (8) and an inward position releasing said wiper blade (2) from said oscillating arm (8).

7. A windscreen wiper device (1) according to claim 6,
wherein said hinge axis is located near an inner edge of said joint part (12).

8. A windscreen wiper device (1) according to claim 6,
wherein said hinge axis is located near an outer edge of said joint part (12).

9. A windscreen wiper device (1) according to claim 6, 7 or 8, wherein said oscillating arm (8) has an at least substantially U-shaped cross-section at the location of its connection to said joint part (12), and wherein said hole (14) is provided in a base (15) of said U-shaped cross-section.

10. A windscreen wiper device (1) according to any of the preceding claims 6 through 9, wherein said joint part (12) comprises at least two lateral resilient tongues extending outwardly, wherein said oscillating arm (8) has an at least substantially U-shaped cross-section at the location of its connection to said joint part (12), and wherein each tongue engages in a correspondingly shaped hole provided in a leg (16) of said U-shaped cross-section.

11. A windscreen wiper device (1) according to any of the preceding claims 6 through 10, wherein said hole(s) (14) has/have a closed circumference.

12. A windscreen wiper device (1) according to any of the preceding claims 1 through 5, wherein said joint part (12) comprises a recess (20) for snappingly receiving a free end of said oscillating arm (8).

13. A windscreen wiper device (1) according to claim 12, wherein said joint part (12) comprises at least one protrusion (22) extending laterally from a longitudinal side of said joint part (12), said protrusion (22) hooking behind a correspondingly shaped protrusion (23) on said oscillating arm (8) for blocking a longitudinal movement of said wiper blade (2) with respect to said oscillating arm (8).

14. A windscreen wiper device (1) according to claim 13, wherein a resilient free end of said joint part (12) can pivot about a hinge axis for snappingly connecting said oscillating arm (8) to said joint part (12).

## Patentansprüche

1. Scheibenwischervorrichtung (1) umfassend ein elastisches längliches Trägerelement, wie auch ein längliches Wischerblatt (2) aus einem flexiblen Material, das an einer zu wischenden Windschutzscheibe anliegend platziert werden kann,
wobei das Wischerblatt (2) auf seinen Längsseiten gegenüberliegende Längsrillen (3) einschließt,
wobei in den Längsrillen beabstandete Längsstreifen (4) des Trägerelements angeordnet sind,
wobei benachbarte Enden (5) der Längsstreifen (4) durch ein jeweiliges Verbindungsstück (6) verbunden sind,
wobei die Scheibenwischervorrichtung (1) eine Verbindungsvorrichtung (7) für einen Schwingarm (8) umfasst,
wobei der Schwingarm (8) um eine Schwenkachse schwenkbar, nahe einem Ende mit der Verbindungsvorrichtung (7), unter Zwischenschaltung eines Verbindungsteils (12) verbunden werden kann,
wobei die Verbindungsvorrichtung (7) ein erstes Teil (9), das mit den Längsstreifen (4) verbunden ist, wie auch ein zweites Teil (9') umfasst, das mit dem ersten Teil (9) verbunden ist,
wobei das zweite Teil (9') und das Verbindungsteil (12) mit gegenseitig zusammenwirkenden Schwenkmitteln versehen sind, um das Verbindungsteil (12) mit dem zweiten Teil (9') schwenkbar zu verbinden,
wobei der zweite Teil (9') abnehmbar mit dem ersten Teil (9) so verbunden ist, dass der erste Teil (9) ein flaches Basisteil ist und eingerichtet ist, um mit verschiedenen Arten der zweiten Teile (9') für verschiedene Arten von Zwischenverbindungen zwischen dem Wischerblatt (2) und dem Schwingarm (8) verbunden zu werden, wobei der Verbindungsteil (12) danach mit dem zweiten Teil (9') verbunden ist, **dadurch gekennzeichnet, dass**
der Verbindungsteil (12) mit dem zweiten Teil durch Vorsprünge (10) des zweiten Teils (9'), die an der Stelle der Schwenkachse in Vertiefungen (11) schwenkbar eingreifen, verbunden ist, die an dem Verbindungsteil (12) bereitgestellt sind, und wobei der Schwingarm (8) danach mit dem Verbindungsteil (12) verbunden werden kann.

2. Scheibenwischervorrichtung (1) nach Anspruch 1, wobei der zweite Teil (9') durch einen Schnapp-/Clipvorgang abnehmbar mit dem ersten Teil (9) verbunden ist.

3. Scheibenwischervorrichtung (1) nach Anspruch 1 oder 2, wobei der zweite Teil (9') Klemmmittel umfasst, die damit einstückig um Längsseiten des ersten Teils (9) herum in Eingriff stehen, die voneinander weg weisen.

4. Scheibenwischervorrichtung (1) nach Anspruch 1, 2 oder 3, wobei der Verbindungsteil (12) an der Stelle seiner Verbindung mit dem zweiten Teil (9') einen, zumindest im Wesentlichen u-förmigen Querschnitt aufweist, und
wobei das Verbindungsteil (12) in jedem Schenkel des u-förmigen Querschnitts mit einer Vertiefung (11) versehen ist, die koaxial mit der Schwenkachse bereitgestellt ist.

5. Scheibenwischervorrichtung (1) nach einem der vorstehenden Ansprüche 1 bis 4, wobei sich die Vorsprünge (10) auf beiden Seiten des zweiten Teils (9') nach außen erstrecken, und
wobei die Vorsprünge (10) zumindest im Wesentlichen zylindrisch sind.

6. Scheibenwischervorrichtung (1) nach einem der vorstehenden Ansprüche 1 bis 5, wobei das Verbindungsteil (12) mindestens eine federnde Zunge (13) umfasst, die in ein entsprechend geformtes Loch (14) eingreift, das in dem Schwingarm (8) bereitgestellt ist, und
wobei die federnde Zunge (13) entlang einer Gelenkachse zwischen einer äußeren Stellung, die das Wischerblatt (2) auf dem Schwingarm (8) hält, und einer inneren Stellung drehbar ist, die das Wischerblatt (2) von dem Schwingarm (8) freigibt.

7. Scheibenwischervorrichtung (1) nach Anspruch 6, wobei die Gelenkachse nahe einem inneren Rand des Verbindungsteils (12) lokalisiert ist.

8. Scheibenwischervorrichtung (1) nach Anspruch 6, wobei die Gelenkachse nahe einem äußeren Rand des Verbindungsteils (12) lokalisiert ist.

9. Scheibenwischervorrichtung (1) nach Anspruch 6, 7 oder 8, wobei der Schwingarm (8) an der Stelle seiner Verbindung zu dem Verbindungsteil (12) einen, zumindest im Wesentlichen u-förmigen Querschnitt aufweist, und
wobei das Loch (14) in einer Basis (15) des u-förmigen Querschnitts bereitgestellt ist.

10. Scheibenwischervorrichtung (1) nach einem der Ansprüche 6 bis 9, wobei der Verbindungsteil (12) mindestens zwei seitliche federnde Zungen umfasst, die sich nach außen erstrecken,
wobei der Schwingarm (8) an der Stelle seiner Verbindung zu dem Verbindungsteil (12) einen zumindest im Wesentlichen u-förmigen Querschnitt aufweist, und
wobei jede Zunge in ein entsprechend geformtes Loch eingreift, das in einem Schenkel (16) des u-förmigen Querschnitts bereitgestellt ist.

11. Scheibenwischervorrichtung (1) nach einem der Ansprüche 6 bis 10, wobei das Loch/die Löcher (14) einen geschlossenen Umfang aufweist/aufweisen.

12. Scheibenwischervorrichtung (1) nach einem der vorstehenden Ansprüche 1 bis 5, wobei das Verbindungsteil (12) eine Vertiefung (20) umfasst, um ein freies Ende des Schwingarms (8) einschnappend aufzunehmen.

13. Scheibenwischervorrichtung (1) nach Anspruch 12, wobei das Verbindungsteil (12) mindestens einen Vorsprung (22) umfasst, der sich seitlich von einer Längsseite des Verbindungsteils (12) erstreckt, wobei der Vorsprung (22) sich hinter einem entsprechend geformten Vorsprung (23) auf dem Schwingarm (8) einhakt, um eine Längsbewegung des Wischerblatts (2) in Bezug auf den Schwingarm (8) zu blockieren.

14. Scheibenwischervorrichtung (1) nach Anspruch 13, wobei ein federndes freies Ende des Verbindungsteils (12) um eine Gelenkachse schwenken kann, um den Schwingarm (8) mit dem Verbindungsteil (12) einschnappend zu verbinden.

## Revendications

1. Dispositif d'essuie-glace (1) comprenant un élément de support allongé élastique, ainsi qu'un balai d'essuie-glace (2) allongé réalisé avec un matériau flexible, qui peut être placé en butée avec un pare-brise à essuyer, lequel balai d'essuie-glace (2) comprend des rainures longitudinales (3) opposées sur ses côtés longitudinaux, dans lesquelles rainures, on dispose des bandes longitudinales (4) espacées de l'élément de support, dans lequel les extrémités voisines (5) desdites bandes longitudinales (4) sont interconnectées par une pièce de raccordement (6) respective, lequel dispositif d'essuie-glace (1) comprend un dispositif de raccordement (7) pour un bras oscillant (8), dans lequel ledit bras oscillant (8) peut être raccordé de manière pivotante audit dispositif de raccordement (7) autour d'un axe de pivot à proximité d'une extrémité, avec l'interposition d'une partie de joint (12), dans lequel ledit dispositif de raccordement (7) comprend une première partie (9) raccordée auxdites bandes longitudinales (4), ainsi qu'une deuxième partie (9') raccordée à ladite première partie (9), dans lequel ladite deuxième partie (9') et ladite partie de joint (12) sont prévues avec des moyens de pivot mutuellement coopérants pour raccorder de manière pivotante ladite partie de joint (12) à ladite deuxième partie (9'), dans lequel ladite deuxième partie (9') est raccordée de manière détachable à ladite première partie (9) de sorte que ladite première partie (9) est une partie de base plate et est agencée pour être raccordée à différents types de ladite deuxième partie (9') pour différents types d'interconnexion entre le balai d'essuie-glace (2) et le bras oscillant (8), dans lequel ladite deuxième partie de joint (12) est ensuite raccordée à ladite deuxième partie (9'), **caractérisé en ce que** ladite partie de joint (12) est raccordée audit deuxième orifice par des saillies (10) se mettant en prise de manière pivotante de ladite deuxième partie (9'), à l'emplacement dudit axe de pivot, dans des évidements (11) prévus dans ladite partie de joint (12), et dans lequel le bras oscillant (8) peut être ensuite raccordé à ladite partie de joint (12).

2. Dispositif d'essuie-glace (1) selon la revendication 1, dans lequel ladite deuxième partie (9') est raccordée de manière détachable à ladite première partie (9) par une opération d' encliquetage/fixation.

3. Dispositif d'essuie-glace (1) selon la revendication 1 ou 2, dans lequel ladite deuxième partie (9') comprend des moyens de serrage solidaires de cette dernière, se mettant en prise autour des bords longitudinaux de ladite première partie (9) qui se font face à distance.

4. Dispositif d'essuie-glace (1) selon la revendication 1, 2 ou 3, dans lequel ladite partie de joint (12) a une section transversale au moins sensiblement en forme de U, à l'emplacement de son raccordement avec ladite deuxième partie (9'), et dans lequel ladite partie de joint (12) dans chaque patte de ladite section transversale en forme de U est prévue avec un évidement (11), prévu de manière coaxiale par rapport audit axe de pivot.

5. Dispositif d'essuie-glace (1) selon l'une quelconque des revendications 1 à 4 précédentes, dans lequel les saillies (10) s'étendent vers l'extérieur de chaque côté de ladite deuxième partie (9'), et dans lequel les saillies (10) sont au moins sensiblement cylindriques.

6. Dispositif d'essuie-glace (1) selon l'une quelconque des revendications 1 à 5 précédentes, dans lequel ladite partie de joint (12) comprend au moins une languette élastique (13) se mettant en prise dans un trou (14) de forme correspondante, prévue dans ledit bras oscillant (8), et dans lequel ladite languette élastique (13) peut tourner le long d'un axe d'articulation entre une position externe retenant ledit balai d'essuie-glace (2) sur ledit bras oscillant (8) et une position interne libérant ledit balai d'essuie-glace (2) dudit bras oscillant (8).

7. Dispositif d'essuie-glace (1) selon la revendication 6, dans lequel ledit axe d'articulation est positionné à proximité d'un bord interne de ladite partie de joint (12).

8. Dispositif d'essuie-glace (1) selon la revendication 6, dans lequel ledit axe d'articulation est positionné à proximité d'un bord externe de ladite partie de joint (12).

9. Dispositif d'essuie-glace (1) selon la revendication 6, 7 ou 8, dans lequel ledit bras oscillant (8) a une section transversale au moins sensiblement en forme de U, à l'emplacement de son raccordement avec ladite partie de joint (12), et dans lequel ledit trou (14) est prévu dans une base (15) de ladite section transversale en forme de U.

10. Dispositif d'essuie-glace (1) selon l'une quelconque des revendications 6 à 9 précédentes, dans lequel ladite partie de joint (12) comprend au moins deux languettes élastiques latérales s'étendant vers l'extérieur, dans lequel ledit bras oscillant (8) a une section transversale au moins sensiblement en forme de U à l'emplacement de son raccordement avec ladite partie de joint (12), et dans lequel chaque languette se met en prise dans un trou de forme correspondante prévu dans une patte (16) de ladite section transversale en forme de U.

11. Dispositif d'essuie-glace (1) selon l'une quelconque des revendications 6 à 10 précédentes, dans lequel ledit (lesdits) trou(s) (14) a/ont une circonférence fermée.

12. Dispositif d'essuie-glace (1) selon l'une quelconque des revendications 1 à 5 précédentes, dans lequel ladite partie de joint (12) comprend un évidement (20) pour recevoir par encliquetage une extrémité libre dudit bras oscillant (8).

13. Dispositif d'essuie-glace (1) selon la revendication 12, dans lequel ladite partie de joint (12) comprend au moins une saillie (22) s'étendant latéralement à partir d'un côté longitudinal de ladite partie de joint (12), ladite saillie (22) s'accrochant derrière une saillie (23) de forme correspondante sur ledit bras oscillant (8) pour empêcher un mouvement longitudinal dudit balai d'essuie-glace (2) par rapport audit bras oscillant (8).

14. Dispositif d'essuie-glace (1) selon la revendication 13, dans lequel une extrémité libre élastique de ladite partie de joint (12) peut pivoter autour d'un axe d'articulation pour raccorder par encliquetage ledit bras oscillant (8) sur ladite partie de joint (12).
